(19) Europäisches Patentamt
European Patent Office
Office européen des brevets

(11) **EP 4 343 878 B1**

(12) **EUROPEAN PATENT SPECIFICATION**

(45) Date of publication and mention
of the grant of the patent:
**29.10.2025 Bulletin 2025/44**

(21) Application number: **23194576.7**

(22) Date of filing: **31.08.2023**

(51) International Patent Classification (IPC):
$H01M\ 4/04^{(2006.01)}$    $H01M\ 4/134^{(2010.01)}$
$H01M\ 4/1395^{(2010.01)}$    $H01M\ 4/38^{(2006.01)}$
$H01M\ 4/40^{(2006.01)}$    $H01M\ 4/58^{(2010.01)}$
$H01M\ 10/052^{(2010.01)}$

(52) Cooperative Patent Classification (CPC):
**H01M 10/052; H01M 4/0485; H01M 4/0488;
H01M 4/134; H01M 4/1395; H01M 4/382;
H01M 4/405; H01M 4/5815; H01M 2004/027;
Y02E 60/10**

(54) **NEGATIVE ELECTRODE INCLUDING LITHIUM-ALKALINE EARTH METAL ALLOY AND LITHIUM ION SECONDARY BATTERY INCLUDING THE SAME**

LITHIUM-SULFUR SEKUNDÄRBATTERIE MIT EINER NEGATIVELEKTRODE MIT EINER LITHIUM-ERDALKALIMETALLLEGIERUNG

BATTERIE SECONDAIRE AVEC UNE ÉLECTRODE NÉGATIVE COMPRENANT UNE ÉLECTRODE COMPRENANT UN ALLIAGE DE MÉTAL LITHIUM-ALCALINO-TERREUX

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **31.08.2022 KR 20220110406
01.08.2023 KR 20230100676
30.08.2023 KR 20230114850**

(43) Date of publication of application:
**27.03.2024 Bulletin 2024/13**

(60) Divisional application:
**25199923.1**

(73) Proprietor: **LG Energy Solution, Ltd.
Seoul 07335 (KR)**

(72) Inventors:
• **KIM, Myeong-Seong
34122 Daejeon (KR)**
• **KIM, Ki-Hyun
34122 Daejeon (KR)**
• **KIM, Yun-Jung
34122 Daejeon (KR)**
• **LEE, Do-Joong
34122 Daejeon (KR)**

(74) Representative: **Goddar, Heinz J.
Boehmert & Boehmert
Anwaltspartnerschaft mbB
Pettenkoferstrasse 22
80336 München (DE)**

(56) References cited:
• **LIU, S. ET AL.: "High Interfacial-Energy Interphase Promoting Safe Lithium Metal Batteries", J. AM. CHEM. SOC. 2020, vol. 142, 6 November 2019 (2019-11-06), pages 2438 - 2447, XP009551898, DOI: https://doi.org/10.1021/jacs.9b11750**

**Description**

**[Cross-Reference to Related Applications]**

This application claims priority Korean Patent Application No. 10-2023-0114850, filed August 30, 2023 and to Korean Patent Application No. 10-2023-0100676, filed August 1, 2023. The present application claims priority to Korean Patent Application No. 10-2022-0110406 filed on August 31, 2022 in the Republic of Korea.

TECHNICAL FIELD

The present disclosure relates to a lithium-sulfur battery with improved battery performance such as output and capacity.

BACKGROUND ART

The lithium-sulfur battery has a high energy density due to a light lithium negative electrode and a sulfur positive electrode with high discharge capacity, so it is in the spotlight as a high energy density secondary battery. However, the lithium metal negative electrode has poor life characteristics due to the formation of lithium dendrites (Li dendrites) or pores during the charging and discharging process of the battery. In addition, the growth of lithium dendrites and the formation of pores increase the surface area of the negative electrode, which accelerates the decomposition of LiPS (lithium polysulfide) and lithium salt on the surface of the negative electrode, which further deteriorates the performance of the lithium-sulfur battery. Therefore, in order to effectively improve the lifespan of a lithium-sulfur battery, uniform plating/elution induction of lithium and interface stabilization are absolutely necessary.

Accordingly, in the present disclosure, the lithium-alkaline earth metal alloy negative electrode is directly used as a negative electrode for a lithium-sulfur battery to stabilize plating/dissolution of the negative electrode and thus improve cell efficiency and lifespan.

Liu et al. J. Am. Chem. Soc. 2020, 142, 2438 discloses Li-Sr alloy for use in lithium metal batteries.

DISCLOSURE

Technical Problem

The present disclosure is designed to solve the above-described problem, and therefore the present disclosure is directed to providing a lithium secondary battery having an improved life time. The present disclosure is directed to providing lithium secondary battery comprising a negative electrode that is prevented from precipitation/elution during battery operation. It will be easily understood that other objects and advantages of the present disclosure can be realized by means or methods described in the claims and combinations thereof.

Technical Solution

The above problem is solved in accordance with the subject-matter of the independent claims. Further embodiments result from the sub-claims and the following written description.

A first aspect of the present invention is a lithium secondary battery, comprising a positive electrode, a negative electrode, a separator interposed between the positive electrode and the negative electrode, and an electrolyte, wherein

the negative electrode is a negative electrode for a lithium secondary battery, comprising a Li-M alloy containing lithium (Li) and at least one metal (M) selected from alkaline earth metals; and
the lithium secondary battery is a lithium-sulfur battery, comprising a positive electrode active material containing sulfur ($S_8$) or a sulfur (S) compound.

According to a second aspect of the present disclosure, in the first aspect, the metal M may be at least one or more selected from the group consisting of beryllium (Be), magnesium (Mg), calcium (Ca), strontium (Sr), barium (Ba), and radium (Ra).

According to a third aspect of the present disclosure, in the first or second aspects, the metal M may be strontium (Sr).

According to a fourth aspect of the present disclosure, in any one of the first to third aspects, the weight ratio of the weight% of Li and of the weight% of M based on the total weight% of the Li-M alloy is in the range between 99:1 to 90:10.

According to a fifth aspect of the present disclosure, in any one of the first to fourth aspects, an amount of metal M is 0.10 mol% to 1.30 mol% of the Li-M alloy.

According to a sixth aspect of the present disclosure, in any one of the first to fifth aspects, the content of metal M may be 1 wt% to 10 wt% of the Li-M alloy.

According to a seventh aspect of the present disclosure, in any one of the first to sixth aspects, in the negative electrode, wherein the Li-M alloy consists of lithium (Li) and at least one metal (M) selected from alkaline earth metals.

According to an eighth aspect of the present disclosure, in any one of the first to seventh aspects, the Li-M alloy consists of lithium (Li) and metal (M) selected from alkaline earth metals.

According to a nineth aspect of the present disclosure, in any one of the first to eighth aspects, the Li-M alloy is 95 wt% or more with respect to 100 wt% of a negative electrode active material in the negative electrode.

According to a tenth aspect of the present disclosure, in any one of the first to nineth aspects, the Li-M alloy is a negative electrode active material layer in the form of a metal foil.

According to an eleventh aspect of the present disclosure, in any one of the first to tenth aspects, the negative electrode may further comprise a current collector.

According to a twelfth aspect of the present disclosure, in the any one of the first to eleventh aspects, the electrolyte is an electrolyte solution comprising a mixture of acyclic ether and cyclic ether; and wherein a volume ratio of the acyclic ether and the cyclic ether is 5:95 to 95:5 (v/v).

According to a thirteenth aspect of the present disclosure, in the any one of the first to twelfth aspects, the lithium secondary battery may be a lithium-sulfur battery in which a positive electrode active material contains sulfur ($S_8$) or a sulfur (S) compound.

According to a fourteenth aspect of the present disclosure, in any one of first to thirteenth aspects, the lithium secondary battery has a retention capacity rate of more than 95%.

A fifteenth aspect of the present disclosure relates to method for preparing a negative electrode for a lithium secondary battery according to any one of the first to eleventh aspects, the method comprising the steps:

melting metallic lithium to obtain a first melt;
adding an alkaline earth metal to the first melt obtained in the melting step to obtain a second melt;
alloying the second melt by maintaining the second melt at a temperature of at least 200°C; and
cooling the second melt obtained in the alloying step to obtain a lithium-lanthanum group alloy.

According to a seventeenth aspect of the present disclosure, in sixteenth aspect, the alloy is obtained in the form of an ingot, and the method further comprises the step of thinning the ingot into a plate structure with a predetermined thickness.

Advantageous Effects

The negative electrode comprising Li-M alloy described herein is applied as a lithium-sulfur battery negative electrode. The lithium-sulfur battery according to the present invention in which the Li-M alloy is introduced as a negative electrode has an effect of improving life characteristics and coulombic efficiency. Specifically, the capacity retention rate of the lithium secondary battery may remain at a high discharge capacity for a long lifetime. Furthermore, the discharge capacity of the lithium secondary battery may be increased. In addition, when the Li-M alloy is used as a negative electrode, uniform electrochemical plating/elution of lithium is induced, thereby effectively suppressing LiPS and lithium salt decomposition due to interfacial side reactions.

BRIEF DESCRIPTION OF THE DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing. Meanwhile, the shape, size, scale or ratio of elements in the drawings included in this application may be exaggerated to emphasize a clearer explanation.

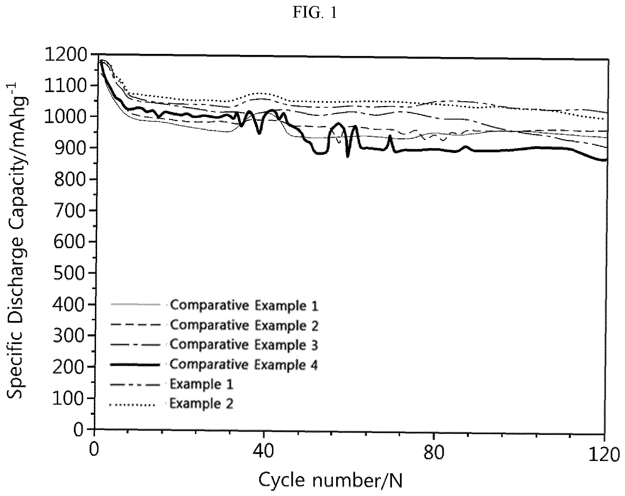

FIG. 1 shows cycle characteristics of batteries manufactured in Examples 1 and 2 and Comparative Examples 1 to 4, respectively. The y-axis shows the specific discharge capacity in mAh/g at 0.3C and the x-axis shows the cycle number of the respective example.

DETAILED DESCRIPTION

Hereinafter, the present disclosure will be described in more detail.

The terminology as used herein is used to describe a specific embodiment and is not intended to limit the present disclosure. The singular form includes the plural form unless the context clearly indicates otherwise.

It should be further understood that 'comprise' or 'include' when used in the specification, specifies the presence of stated features, integers, steps, operations, elements, components or a combination thereof, and unless expressly stated otherwise, does not preclude the presence or addition of one or more other functions, integers, steps, operations, elements, components or a combination thereof.

Throughout this specification, when any part "contains", "comprises", "includes" or "has" a certain component, this means that the part may further include other components, not excluding other components unless otherwise stated. The term "comprise", "contain" or "include" explicitly states the meaning of "consist of" but is not limited thereto.

As used herein, the term "comprising essentially of" has the meaning of "comprising at least 70%", preferably "comprising at least 80%", and most preferably "comprising at least 90%". When referring to amounts of constituents of mixtures of substances, percentages refer to percentages by weight relative to the total weight of each mixture, unless otherwise indicated. For example, a material that consists essentially of polyethylene includes polyethylene in an amount of at least 70% by weight based on the total weight of the material.

The terms "about" and "substantially" are used herein in the sense of "at", or "nearly at", when given the manufacturing and material tolerances inherent in the stated circumstances and are used to prevent the unscrupulous infringer from unfairly taking advantage of the present disclosure where exact or absolute figures are stated as an aid to understanding the present disclosure.

Throughout the present specification, A and/or B refers to either A or B or both.

In the present disclosure, "specific surface area" is measured by the BET method. Specifically, it may be calculated from the adsorption amount of nitrogen gas under the liquid nitrogen temperature (77K) using BEL Japan's BELSORP-mino II.

The term "polysulfide" as used herein is the concept that covers "polysulfide ion ($S_x^{2-}$, x = 8, 6, 4, 2)" and "lithium polysulfide ($Li_2S_x$ or $LiS_x^-$, x = 8, 6, 4, 2)".

The term "composite" as used herein refers to a material with physically and chemically different phases and more effective functions, formed by combining two or more materials.

The term "porosity" used in the present specification refers to a fraction of voids in a structure over the total volume and is indicated in %, and may be used interchangeably with void fraction, degree of porosity or the like. In the present disclosure, the porosity measurement is not limited to a particular method, and according to an embodiment of the present disclosure, for example, the porosity may be measured by BET (Brunauer-Emmett-Teller) measurement method using nitrogen gas or mercury permeation method (Hg porosimeter) and ASTM D-2873.

In addition, the net density of the electrode may be calculated from the density (apparent density) of the electrode, the composition ratio of the materials included in the electrode, and the density of each component. The porosity of the electrode is calculated from the difference between the apparent density and the net density. For example, porosity can be calculated by Equation 1 below.

[Equation 1]

$$\text{Porosity (volume \%)} = \{1-(\text{apparent density/net density})\} \times 100$$

The apparent density in Equation 1 can be calculated from Equation 2 below.

Apparent density (g/cm$^3$) = (weight of electrode (g))/{(thickness of electrode (cm)) $\times$ (area of electrode (cm$^2$))}     [Equation 2]

Apparent density, also known as bulk density, is a measure of how much space a material occupies per unit volume, including the voids or empty spaces within it. Apparent density takes into account both the solid material and any voids present within a given volume.

Apparent density may be calculated by dividing the mass of a substance by its total volume, including any pores or voids. The formula for calculating apparent density is:

$$\text{Apparent Density} = \text{Mass} / \text{Total Volume}$$

The sample of the material may be measured using a balance.

The volume for regularly shaped samples (e.g. cube, cylinder, etc.) may be measured in its dimensions using appropriate tools such as a ruler or calipers, known by the skilled person in the art. For irregularly shaped samples the volume may be measured by the displacement of a liquid with known volume and measuring the change in volume. The change in volume may be equal to the volume of the sample. The skilled person may use other methods known in the art for measuring the volume of the sample, as well as of the apparent density.

The net density, also referred to as true density, may be a measure of the density of a material without considering any voids or pores within it. It may represent the mass of the solid material divided by its actual volume, excluding any empty spaces.

The net density may be calculated by dividing the mass of a substance by its solid, unoccupied volume. The formula for calculating net density is:

$$Net\ Density = Mass\ /\ Solid\ Volume$$

Unlike apparent density, which takes into account the total volume including voids, net density provides a measure of the material's intrinsic density.

The net density may be determined by the method as mentioned above, or alternatively by gas pycnometry according to ISO 12154:2014, or other measurement methods known by the skilled person in the art.

In the present disclosure, "particle diameter $D_{50}$" refers to a particle size at 50% of the volume-cumulative particle size distribution of particles. The particle diameter $D_{50}$ may be measured by the laser diffraction method. For example, it may be measured by dispersing particles in a dispersion medium, introducing into a commercially available laser diffraction particle size analyzer (for example, Microtrac MT 3000), irradiating ultrasound of about 28 kHz with an output of 60 W to acquire a volume-cumulative particle size distribution graph, and determining a particle size corresponding to 50% of the cumulative volume. In the present disclosure, the particle diameter $D_{50}$ may be measured according to ISO 9276.

The thickness of the negative electrode may be measured using a thickness measurement device by any known means for measuring the thickness of the component of a battery. For instance, it may be measured using contact-type thickness measurement instruments such as Mitutoyo's handheld micrometer or a Stylus Profiler (e.g., Bruker's Dektak 150 Surface Profiler). Rotary calipers (e.g., Maysun's RC-1W-200) may also be used for measurement. For example, when utilizing the Stylus Profiler, the subject to be measured is fixed on the sample stage to ensure that the movement direction of the tip and the surface of the target align perpendicularly. Subsequently, by moving the Stylus, the thickness may be measured. In one embodiment, the stylus force is set to 5 mg, and the measurement speed may be adjusted to 0.05 mm/s. Alternatively, in the context of the present invention, the thickness may be measured using a laser scan micrometer according to ASTM D374.

Additionally, the size and thickness of each element in the accompanying drawings is arbitrary for convenience of description, and the present disclosure is not necessarily limited thereto. In the accompanying drawings, the thickness is exaggerated to clearly represent different layers and portions. Additionally, in the accompanying drawings, for convenience of description, the thickness is exaggerated to clearly represent some layers and portions.

## Negative electrode

The first aspect of the present disclosure is directed to a lithium secondary battery comprising a negative electrode active material for a negative electrode.

The negative electrode active material includes an alloy containing, preferably consisting of lithium and at least one metal M selected from alkaline earth metals. In other words, the negative electrode active material includes an alloy containing, preferably consisting of, lithium and at least one kind of metal M selected from alkaline earth metals. In some embodiments, a negative electrode comprising an alloy Li-M, wherein Li is lithium and M is an alkaline earth metal. In this specification, the Li-M alloy is used to call an alloy of lithium and the metal M. The alkaline earth metals may be the elements found in group 2 of the periodic table. Preferably, the Li-M alloy may consist of lithium (Li) and metal (M) selected from alkaline earth metals.

In the present disclosure, the alkaline earth metal may mean beryllium (Be), magnesium (Mg), calcium (Ca), strontium (Sr), barium (Ba), and radium (Ra). The metal M may be at least one or more, preferably at least one or two, more preferably one, selected from the group consisting of beryllium (Be), magnesium (Mg), calcium (Ca), strontium (Sr), barium (Ba), and radium (Ra). In the present disclosure, the metal M preferably includes strontium (Sr). Thus, at least one metal may be strontium. More preferably metal M is strontium (Sr).

In some embodiments of the present disclosure, the content of alkaline earth metal may be 1 mol% or less with respect to 100 mol%, i.e. the total amount, of the Li-M alloy. The content of alkaline earth metal may be above 0 mol% with respect to 100 mol% of the Li-M alloy. The content of alkaline earth metal may be in the range between 0.01 mol% and 1.30 mol%, between 0.01 mol% and 1.0 mol%, between 0.05 mol% and 0.95 mol%, between 0.1 mol% and 0.90 mol%, between 0.15 mol% and 0.85 mol%, between 0.20 mol% and 0.80 mol%, between 0.25 mol% and 0.75 mol%, between 0.25 mol% and 0.6 mol%, with respect to 100 mol% of the Li-M alloy. Preferably, the content of alkaline earth metal may be in the range between 0.10 mol% and 1.30 mol%, between 0.30 mol% and 1.0 mol%.

In some embodiments of the present disclosure, the content of lithium in the alloy may be 99 mol% or more with respect to 100 mol%, i.e. the total amount, of the Li-M alloy. The content of alkaline earth metal may be below 100 mol% with respect to 100 mol% of the Li-M alloy. The content of lithium may be in the range between 98.7 mol% and 99.99 mol%, between 99 mol% and 99.99 mol%, between 99.05 mol% and 99.95 mol%, between 99.1 mol% and 99.9 mol%, between 99.15 mol% and 99.85 mol%, between 99.2 mol% and 99.8 mol%, 99.25 mol% and 99.75 mol%, 99.4 mol% and 99.75 mol%, with respect to 100 mol% of the Li-M alloy. Preferably, the content of lithium metal may be in the range between 98.70 mol% and 99.90 mol%, between 97.7 mol% and 99.0 mol%.

The upper limit and/or lower limit of the metal M may be controlled within an appropriate range considering the electrochemical characteristics of the battery to which the negative electrode is finally applied. If the negative electrode contains, preferably consists of, the alloy Li-M in the above described ranges, the life characteristics and coulombic efficiency of a lithium secondary battery may be improved. Specifically, the capacity retention rate of the lithium secondary battery may remain at a high discharge capacity for a long lifetime. Furthermore, the discharge capacity of the lithium secondary battery may be increased. If an excessively large amount of alkaline earth metal M is included in the alloy, the Coulombic efficiency becomes unstable and the average efficiency value may be lowered compared to the lithium metal negative electrode to which the alloy is not applied. Thus, in other words, capacity retention rate may decrease and the battery may have a reduced lifetime.

In some embodiments of the present disclosure, in the alloy Li-M, the alkaline earth metal M may be included above 0 wt% with respect to 100 wt%, i.e. total amount, Li-M alloy.

In some embodiments of the present disclosure, in the alloy Li-M, the metal M may be included in the range of 1 wt% to 10 wt% based on the total alloy. Meanwhile, in terms of improving life characteristics and coulombic efficiency, the metal M may be included in an amount of 3 wt% or more, 5 wt% or more, or 7 wt% or more of the alloy. Specifically, the capacity retention rate of the lithium secondary battery may remain at a high discharge capacity for a long lifetime when the battery fulfills the above ranges. Meanwhile, the discharge capacity of the lithium secondary battery may be increased when the battery fulfills the above ranges. On the other hand, if an excessively large amount of metal M is included in the alloy, the Coulombic efficiency becomes unstable and the average efficiency value may be lowered compared to the lithium metal negative electrode to which the alloy is not applied. Thus, the content of metal M may be preferably controlled to 10 wt% or less. The wt% (wt%) may be with respect to 100 wt%, i.e. total amount, of the Li-M alloy. The upper limit and/or lower limit of the metal M may be controlled within an appropriate range considering the electrochemical characteristics of the battery to which the negative electrode is finally applied.

In some embodiments of the present disclosure, in the alloy Li-M, the Li (lithium) may be included in the range of 90 wt% or more and less than 100 wt% based on the total alloy. Meanwhile, in terms of improving life characteristics and coulombic efficiency, the metal M may be included in an amount of 90 wt% or more, 93 wt% or more, or 95 wt% or more of the alloy. Specifically, the capacity retention rate of the lithium secondary battery may remain at a high discharge capacity for a long lifetime when the battery fulfills the above ranges. Meanwhile, the discharge capacity of the lithium secondary battery may be increased when the battery fulfills the above ranges. On the other hand, if the amount of Li (lithium) does not meet the above range in the alloy, the Coulombic efficiency becomes unstable and the average efficiency value may be lowered compared to the lithium metal negative electrode to which the alloy is not applied. The wt% (wt%) may be with respect to 100 wt%, i.e. total amount, of the Li-M alloy. The upper limit and/or lower limit of the Li (lithium) may be controlled within an appropriate range considering the electrochemical characteristics of the battery to which the negative electrode is finally applied.

In some embodiments of the present disclosure, the weight ratio of the weight% of Li and of the weight% of M based on the total weight% of the Li-M alloy is in the range between 99:1 and 90:10 or between 97:3 and 90:10 or 95:5 and 90:10 or 93:7 or 90:10. For example the ratio may be 99:1 to 95:5 or 93:7 to 97:3. The weight% of Li (lithium) may be determined with respect to 100 wt%, i.e. total amount, of the Li-M alloy and/or with respect to total weight of the Li and M(metal). The weight% of M (metal) may be determined with respect to 100 wt%, i.e. total amount, of the Li-M alloy and/or with respect to total weight of the Li and M (metal).

If the negative electrode contains, preferably consists of, the alloy Li-M in the above described ranges, the life characteristics and coulombic efficiency of the lithium secondary battery may be improved. The lithium sulfur battery containing the negative electrode may have an enhanced capacity retention at a high discharge capacity rate which remains high, even after several uses. If an excessively large amount of alkaline earth metal M is included in the alloy, the Coulombic efficiency becomes unstable and the average efficiency value may be lowered compared to the lithium metal negative electrode to which the alloy is not applied. Thus, in other words, the discharge capacity may decrease and the capacity retention rate may decrease. Furthermore, the battery may have a reduced lifetime.

Meanwhile, in some embodiments of the present disclosure, the alloy Li-M may contain 1 mole or less of metal M relative to 100.00 moles of lithium, for example 0.075 to 0.90 moles, more specifically 0.078 to 0.086 moles.

In addition, in some embodiments of the present disclosure, the negative electrode may include 95 wt%, 95 wt% to 100 wt%, 98 wt% to 99.9 wt%, 98 wt% to 99 wt% or more of the Li-M alloy as a negative electrode active material, and for example, in the negative electrode, the negative electrode active material may be made of Li-M alloy. In some embodiments of the present disclosure, the negative electrode active material may consist of the Li-M alloy.

Meanwhile, the negative electrode may be applied to the lithium secondary battery according to the present disclosure by manufacturing the Li-M alloy in the form of a foil. That is, in the present disclosure, the Li-M alloy foil may be used as the negative electrode active material layer. In other words, the Li-M alloy may be a negative electrode active material layer in the form of a metal foil. In some embodiments of the present disclosure, the thickness of the negative electrode active material layer may be 0.1 $\mu$m or more and 200 $\mu$m or less in terms of realizing high energy density by providing a lithium supply sufficient for charging a battery. For example, the Li-M alloy foil may have a thickness of 180 $\mu$m or less, 160 $\mu$m or less, 150 $\mu$m or less, 140 $\mu$m or less, 130 $\mu$m or less, 120 $\mu$m or less, 110 $\mu$m or less, or 100 $\mu$m or less, or 90 $\mu$m or less or 80 $\mu$m or less, or 70 $\mu$m or less. Meanwhile, the thickness of the negative electrode active material layer may be 0.1 $\mu$m or more, 0.5 $\mu$m or more, 2 $\mu$m or more, 5 $\mu$m or more, 10 $\mu$m or more, 20 $\mu$m or more, 30 $\mu$m or more, 40 $\mu$m or more, 50 $\mu$m or more, 70 $\mu$m or more, 75 $\mu$m or more, or 90 $\mu$m or more. The Li-M alloy foil may have a thickness of 0.1 $\mu$m to 180 $\mu$m. In a specific embodiment, the Li-M alloy foil may have a thickness of 40 $\mu$m to 80 $\mu$m, 50 $\mu$m to 70 $\mu$m, more. In some embodiments of the present disclosure, the negative electrode may be formed of the Li-M foil alone without a current collector, or may be formed by bonding a current collector and a Li-M alloy foil.

Thus, the negative electrode may consist of Li-M and optional a current collector.

The thickness of the negative electrode may be measured by any known means for measuring the thickness of the components of a battery as specified above. For example, it may be measured using a Mitutoyo's thickness meter, although not being limited thereto. In the present disclosure, the thickness of the negative electrode may be measured by laser scan micrometer according to ASTM D374.

The Li-M foil according to the present disclosure may be monolithic. The monolithic means that there is no concentration gradient in the concentration of metal M in the Li-M foil according to the present disclosure. Moreover, the Li-M foil according to the present disclosure may be substantially homogeneous. The Li-M foil according to the present disclosure may be homogeneous. The Li-M foil according to the present disclosure is a substantially homogeneous bulk material, wherein the entire bulk material is homogeneous in a continuous phase. That is, all of the metal M is melted and the entire bulk is in a completely homogeneous state in a continuous phase with lithium.

In an embodiment of the present disclosure, the negative electrode current collector may use any type of negative electrode current collector commonly used in the art, for example copper, stainless steel, aluminum, nickel, titanium, sintered carbon, copper or stainless steel treated with carbon, nickel, titanium or silver on the surface and an aluminum-cadmium alloy. The negative electrode current collector may be typically 3 $\mu$m to 500 $\mu$m in thickness, and in the same way as the positive electrode current collector, may have microtextured surfaces to enhance the adhesion of the negative electrode active material. The negative electrode current collector may be used in various forms, for example, a film, a sheet, a foil, a net, a porous body, a foam and a nonwoven. For example, when a metal foil type current collector is used, the current collector may have a thickness of 1 $\mu$m to 20 $\mu$m.

Meanwhile, the method of forming the Li-M foil is not particularly limited, and a method of forming a layer or film commonly used in the art may be used. For example, a method such as compression method, coating method, may be used.

The Li-M foil is obtainable by a method comprising the steps: a) melting metallic lithium to obtain a lithium melt; b) adding a metal M to the lithium melt obtained in step a) to obtain a lithium-metal M melt; c) maintaining the lithium-metal M melt obtained in step b) at a temperature of at least 200°C; and d) cooling the lithium-metal M melt obtained in step c) to obtain a lithium-metal M, preferably as an ingot; and preferably e) manufacturing a lithium-metal M alloy foil from the lithium-metal M melt alloy, which may be an ingot.

The manufacturing method may comprise placing a solid piece of lithium, such as a lithium ingot, together with a solid piece, such as a metal M pellet, into an appropriate heating means, such as a vessel, etc. The heating means may further comprise stirring means allowing to stir a melt of the three metals and means for providing an inert gas atmosphere in the heating means. The step a) of providing metallic lithium together with metal M may not comprise a sputtering step, such as DC sputter. Rather, the melting in step b) may include stirring the melt. In this way, a more cost-efficient way is provided to provide a lithium-metal M alloy foil with even improved homogeneous metal M distribution in the foil.

The melting may comprise heating the metallic lithium together with a metal M at a temperature from 200°C to 500°C.

The cooling in step d) may be cooling to room temperature, preferably a temperature between 20°C and 27°C, preferably between 23°C and 25°C.

In an embodiment of the present disclosure, the method by which the lithium-metal M foil is achieved may comprise the following step of manufacturing a lithium-metal M foil from the lithium-metal M alloy ingot, wherein the manufacturing comprises roll pressing of the lithium-metal M alloy ingot. The roll pressing may include that heat and pressure are simultaneously applied, and may be performed using a hot roll press or the like.

Meanwhile, in an embodiment of the present disclosure, the method further comprises the step f) of depositing/bonding the lithium-metal M foil obtained as above on a current collector.

### Secondary battery

The present disclosure is directed to a lithium ion secondary battery including the negative electrode.

### Positive electrode (lithium-sulfur battery)

The lithium ion secondary battery is a lithium-sulfur battery.

The positive electrode according to the present disclosure comprises a current collector and a positive electrode active material layer on at least one surface of the current collector.

The current collector may be any material that has electrical conductivity and is used as a current collection component in the corresponding technical field. For example, the positive electrode current collector may include stainless steel, aluminum, nickel, titanium, sintered carbon, or aluminum or stainless steel treated with carbon, nickel, titanium or silver on the surface. The positive electrode current collector may be typically 3 $\mu$m to 500 $\mu$m in thickness, and may have microtextured surfaces to improve the adhesion of a positive electrode active material. The positive electrode current collector may come in various forms, for example, a film, a sheet, a foil, a net, a porous body, a foam and a nonwoven.

In some embodiments of the present disclosure, the positive electrode active material layer includes a positive electrode active material, a conductive material, and a binder material. The positive electrode active material layer may include 80 to 97 wt% of the positive electrode active material, 2 to 10 wt% of the conductive material, and 2 to 10 wt% of the binder based on the total weight of the positive electrode active material, the conductive material, and the binder material.

In the present disclosure, the positive electrode active material may comprise the sulfur-carbon composite. Preferably, the positive electrode active material may comprise the sulfur-carbon composite in an amount of 80 wt% or more and preferably 90 wt% or more based on 100 wt% of the positive electrode active material. More preferably, the positive electrode active material may comprise the sulfur-carbon composite alone. In addition, it is preferable that the content of sulfur is 70 wt% or more, or preferably 80 wt% or more, relative to 100 wt% of the sulfur-carbon composite.

In some embodiments of the present disclosure, the sulfur-carbon composite may be composited by simply mixing the sulfur and the carbon material, or may have a coating form of a core-shell structure or a supported form. In the coating form of the core-shell structure, one of sulfur and carbon material is coated with another material, and for example, the surface of the carbon material may be wrapped with sulfur, or vice versa. The carbon material has a porous structure with pores inside and on the surface of the body, and may have a form in which sulfur is filled in the internal pores. Any form of the sulfur-carbon composite can be used as long as it satisfies the content ratio of the sulfur-based compound and the carbon material described below, and is not limited in the present disclosure. Meanwhile, in the present disclosure, it is preferable that the content of sulfur is 70 wt% or more with respect to the total weight of the positive electrode active material.

Since the sulfur alone is not electrically conductive, it is used in combination with a carbon material.

In an embodiment of the present disclosure, the sulfur-based material may include at least one selected from the group consisting of inorganic sulfur ($S_8$), $Li_2S_n$ ($n \geq 1$), a disulfide compound such as 2,5-dimercapto-1,3,4-thiadiazole, 1,3,5-trithiocyanuic acid, an organosulfur compound and a carbon-sulfur polymer (($C_2S_x)_n$, x = 2.5 to 50, n $\geq$ 2). Preferably, the sulfur-based material may include inorganic sulfur ($S_8$).

The carbon material has a porous structure comprising a plurality of irregular pores on the surface and inside thereof. The carbon material acts as a host to provide the skeleton for uniform and stable immobilization of sulfur and improves the electrical conductivity of sulfur to enhance electrochemical reaction. In particular, in the sulfur-carbon composite, when the carbon material that acts as the sulfur host has large BET specific surface area and optimal particle diameter $D_{50}$, it may be possible to increase the sulfur loading of the carbon material, reduce the irreversible capacity and increase the energy density, thereby increasing the availability of sulfur during electrochemical reaction.

In some embodiments of the present disclosure, the BET specific surface area of the carbon material may be at least 100 $m^2$/g and may be at most 3000 $m^2$/g. Together with or independently of this, the carbon material may have a primary particle diameter ($D_{50}$) of 1 $\mu$m to 50 $\mu$m.

When the BET specific surface area and particle size ($D_{50}$) of the carbon material satisfy the above ranges, it is possible to uniformly disperse sulfur on the inner and outer surfaces of the carbon material, while lowering the irreversible capacity, thereby increasing the electrochemical reactivity of sulfur. In addition, the use of carbon materials improves the electrochemical reactivity, stability, and electrical conductivity of the sulfur-carbon composite, which not only improves the capacity and life characteristics of the lithium-sulfur battery, but also shows the optimal charge/discharge performance even if loss or volume change of sulfur during charging and discharging occurs.

When the primary particle diameter ($D_{50}$) exceeds 50 $\mu$m, it is difficult to efficiently use sulfur located at the center of carbon because it is difficult to move lithium ion into the particle due to restrictions on material movement. If the primary particle diameter ($D_{50}$) is less than 1 $\mu$m, it is difficult to increase the solid content because a lot of solvent is required in the process of manufacturing electrode slurry, and there is a problem in that output is reduced because sufficient pores are not secured between particles.

In the sulfur-carbon composite of the present disclosure, the carbon material used as the sulfur host may be typically manufactured by carbonating various carbon precursors.

Meanwhile, in an exemplary embodiment of the present disclosure, the diameter of the carbon material may be in a range between 0.5 nm and 200 nm based on the longest diameter. The carbon material may be spherical, rod-shaped, needle-shaped, plate-shaped, tube-shaped or bulk-shaped, and may have any shape commonly used in lithium-sulfur secondary batteries without limitation.

The carbon material may include any type of carbon-based material having porous and conductive properties commonly used in the corresponding technical field. The carbon material may include, for example, at least one selected from the group consisting of graphite; graphene; carbon black such as denka black, acetylene black, ketjen black, channel black, furnace black, lamp black, thermal black; carbon nanotubes (CNTs) such as single-walled carbon nanotubes (SWCNTs), multi-walled carbon nanotubes (MWCNTs); carbon fibers such as graphite nanofibers (GNFs), carbon nanofibers (CNFs), activated carbon fibers (ACFs); graphite such as natural graphite, artificial graphite, expandable graphite; carbon nanoribbon; carbon nanobelt, carbon nanorod and activated carbon.

In an embodiment of the present disclosure, the amount of the conductive material may be 0 to 30 wt%, for example, 1 to 30 wt%, 15 to 30 wt%, 20 to 30 wt%, based on the total weight of the sulfur-carbon composite. If the content of the conductive material is below the above ranges, voltage and capacity may decrease because the electron transfer between the positive electrode active material and the current collector is not easy. On the contrary, if it exceeds the above ranges, the total energy (charge) of the battery may decrease due to the relatively decreased proportion of the positive electrode active material. Therefore, it is preferred that an appropriate content is determined within the above ranges.

In the sulfur-carbon composite according to the present disclosure, the sulfur may be disposed in at least one of the inside of the pores of the carbon material and the outer surface of the carbon material, and in this instance, the sulfur-based material may be present in less than 100%, preferably 1 to 95%, and more preferably 60 to 90% of the entire inner and outer surface of the carbon material. When the sulfur is present on the surface of the carbon material within the above-described range, the maximum effect may be achieved in terms of electron transport area and electrolyte wettability. Specifically, within the above-described range, the sulfur may be uniformly impregnated at a small thickness over the surface of the carbon material, thereby increasing the electron transport contact area during charging and discharging. When the sulfur is present over 100% area of the entire surface of the carbon material, the carbon material is completely covered with the sulfur, so the electrolyte wettability reduces and the contact between the carbon material and the conductive material included in the electrode decreases, and as a consequence, it fails to accept electrons and participate in reaction.

Additionally, in an exemplary embodiment of the present disclosure, the sulfur-carbon composite may be obtained by the following manufacturing method.

The method for manufacturing a sulfur-carbon composite according to the present disclosure may include, without limitation, any method commonly known in the corresponding technical field. The method may comprise (S1) mixing the carbon material with the sulfur and (S2) forming a composite.

The step (S1) of mixing is performed to increase the miscibility between the sulfur and the carbon material, and may be performed using a stirring device commonly used in the corresponding technical field. In this instance, the mixing time and speed may be selectively controlled depending on the amounts of raw materials and the conditions.

The step (S2) of forming a composite may be performed by any method commonly used in the corresponding technical field without limitation. For example, the method commonly used in the corresponding technical field may include a dry composite forming method and a wet composite forming method such as spray coating. For instance, a mixture obtained by mixing the sulfur with the carbon material may thermally treated so that molten sulfur may be uniformly coated in the carbon material and on the outer surface of the carbon material. Meanwhile, in some embodiments of the present disclosure, a process of pulverizing the mixture of the sulfur and the carbon material by a method such as ball milling may be performed before the heat treatment. In some embodiments of the present disclosure, the heat treatment may be performed at a temperature condition of 120°C to 160°C for about 20 minutes to 24 hours, and a heating device such as an oven may be applied.

The sulfur-carbon composite manufactured by the above-described manufacturing method may achieve large specific surface area, high loading amount of the sulfur and improved availability of sulfur, thereby improving the electrochemical reactivity of sulfur, and improve the access and contact of the electrolyte solution, thereby improving the capacity and life characteristics of the lithium-sulfur battery.

## Other positive electrode materials

In an exemplary embodiment of the present disclosure, the positive electrode active material may comprise the sulfur-carbon composite alone. In addition to the sulfur-carbon composite, the positive electrode active material may further comprise at least one additive selected from the group consisting of transition metals, group IIIA elements, group IVA elements, sulfur compounds of these elements, and alloys of these elements with sulfur.

In a specific exemplary embodiment of the present disclosure, the positive electrode active material layer may comprise a lithium transition metal composite oxide represented by the following [Chemical Formula 1].

$$[\text{Chemical Formula 1}] \qquad Li_aNi_bCo_cM^1_dM^2_eO_2$$

In the Chemical Formula, $M^1$ may be Mn, Al or a combination thereof, and preferably Mn, or Mn and Al.
$M^2$ may be at least one selected from the group consisting of Zr, W, Y, Ba, Ca, Ti, Mg, Ta and Nb, preferably at least one selected from the group consisting of Zr, Y, Mg and Ti, and more preferably Zr, Y or a combination thereof. $M^2$ is not an essential component, but when $M^2$ is included in a certain amount, it is possible to promote the particle growth during sintering or improve the crystal structure stability.

## Conductive material

The conductive material is used to impart the conductive property to the negative electrode, and may include any type of conductive material that has electrical conductivity without causing any chemical change in the battery. Specific examples may include at least one of graphite such as natural graphite or artificial graphite; carbon-based materials such as carbon black, acetylene black, ketjen black, channel black, furnace black, lamp black, thermal black, carbon fibers, carbon nanotubes; metal powder or metal fibers such as copper, nickel, aluminum, silver; conductive whiskers such as zinc oxide, potassium titanate; conducting metal oxides such as titanium oxide; or conductive polymers such as polyphenylene derivatives. The conductive material may be typically included in an amount of 1 to 30 wt%, preferably 1 to 20 wt%, and more preferably 1 to 10 wt% based on the total weight of the negative electrode active material layer.

## Binder material

The binder material serves to improve adhesion between positive electrode active material particles and adhesion between the positive electrode active material and the positive electrode current collector. Specific examples of the binder material include polyvinylidene fluoride (PVDF), vinylidenefluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene monomer (EPDM) rubber, sulfonated-EPDM, styrene butadiene rubber (SBR), fluoro rubber, and various copolymers thereof, etc., and among them, one type alone or a mixture of two or more types may be used.
In an exemplary embodiment of the present disclosure, the content of the binder may be 1-10 wt% based on the total weight of the positive electrode active material layer. If the content of the binder is below the above range, the positive electrode active material and the conductive material may be separated because the physical properties of the positive electrode worsen. And, if it exceeds the above range, the battery capacity may decrease as the relative ratio of the positive electrode active material and the conductive material in the positive electrode is decreased. Therefore, it is desired that an appropriate content is determined within the above range.

## Electrode assembly

Another aspect of the present disclosure is directed to an electrode assembly including the negative electrode. The negative electrode may be according to the above description. The positive electrode may include the aforementioned sulfur-carbon composite as a positive electrode active material. The electrode assembly comprises the negative electrode, the positive electrode and the separator interposed between the negative electrode and the positive electrode. For example, the negative electrode and the positive electrode may be stacked with the separator interposed between them to form a stack type or stack/folding type structure, or may be wound to form a jelly-roll type structure. When the jelly-roll structure is formed, an additional separator may be disposed on the outer side to prevent the contact between the negative electrode and the positive electrode.

## Separator

The separator is disposed in the electrode assembly to be interposed between the negative electrode and the positive electrode. The separator separates the negative electrode and the positive electrode from each other and provides a path for moving lithium ions. Any material normally used as a separator in a lithium secondary battery can be used without particular limitations. Specifically, as the separator, a porous polymer film, for example a porous film made of polyolefin polymers such as ethylene homopolymer, propylene homopolymer, ethylene/butene copolymer, ethylene/-hexene copolymer, and ethylene/methacrylate copolymer, or a laminated structure of two or more layers thereof may be used. In addition, conventional porous non-woven fabrics, for example non-woven fabrics made of high-melting glass fibers, polyethylene terephthalate fibers, and the like may be used. In addition, a separator coated with a coating layer containing a ceramic component or a polymer material may be used to secure heat resistance or mechanical strength.

**Battery**

Another aspect of the present disclosure relates to an electrochemical device comprising the electrode assembly. The electrochemical device comprises a battery case accommodating the electrode assembly and the electrolyte together, and the battery case may be an appropriate one selected from any type of battery case commonly used in the art, for example a pouch type and a metal can type, without limitation. The shape of the battery is not particularly limited, and the battery may have various shapes such as cylindrical, stacked, and coin shapes.

**Electrolyte**

In the present disclosure, the electrolyte may include an organic solvent and a lithium salt.

The electrolyte may be an electrolyte solution comprising a nonaqueous solvent as a medium for the movement of ions involved in the electrochemical reaction of the lithium-secondary battery and a lithium salt as an electrolyte.

In the present disclosure, the electrolyte may be an electrolyte solution comprising a mixture of acyclic ether and cyclic ether.

In the present disclosure, the electrolyte may be an electrolyte solution comprising a volume ratio of the acyclic ether and the cyclic ether may be 5:95 to 95:5 (v/v).

In the present disclosure, a volume ratio (v/v) of the noncyclic ether and the cyclic ether may be 5:95 to 95:5 (v/v), specifically 80:20 to 20:80, and more specifically 70:30 to 30:70, 60:40 to 40:60 or 50:50. In the present disclosure, the volume ratio corresponds to a ratio of "volume% of the acyclic ether": "volume% of the cyclic ether" in mixture of acyclic ether and cyclic ether.

In a specific embodiment of the present disclosure, a volume ratio (v/v) of the noncyclic ether and the cyclic ether may be 50:50 (v/v).

In a specific embodiment of the present disclosure, a volume ratio (v/v) of 1,3-dioxolane and dimethyl ether may be 5:95 to 95:5 (v/v).

**Organic solvent**

The organic solvent acts as a medium for the movement of ions involved in the electrochemical reaction of the battery. As the organic solvent, those conventionally used in an electrolyte solution for a lithium secondary battery may be used without limitation, and for example, ether, ester, amide, linear carbonate, cyclic carbonate, etc. may be used alone or in combination of two or more. Among them, representatively, ether-based compounds may be comprised.

The ether-based compound may comprise acyclic ethers and cyclic ethers.

For example, the acyclic ether may be, but is not limited to, at least one selected from the group consisting of dimethyl ether, diethyl ether, dipropyl ether, methylethyl ether, methylpropyl ether, ethylpropyl ether, dimethoxyethane, diethoxyethane, ethylene glycol ethylmethylether, diethylene glycol dimethyl ether, diethylene glycol diethyl ether, diethylene glycol methylethyl ether, triethylene glycol dimethyl ether, triethylene glycol diethyl ether, triethylene glycol methylethyl ether, tetraethylene glycol dimethyl ether, tetraethylene glycol diethyl ether, tetraethylene glycol methylethyl ether, polyethylene glycol dimethyl ether, polyethylene glycol diethyl ether, and polyethylene glycol methylethyl ether.

As an example, the cyclic ether may be, but is not limited to, at least one selected from the group consisting of 1,3-dioxolane, 4,5-dimethyl-dioxolane, 4,5-diethyl-dioxolane, 4-methyl-1,3-dioxolane, 4-ethyl-1,3-dioxolane, tetrahydrofuran, 2-methyltetrahydrofuran, 2,5-dimethyltetrahydrofuran, 2,5-dimethoxytetrahydrofuran, 2-ethoxytetrahydrofuran, 2-methyl-1,3-dioxolane, 2-vinyl-1,3-dioxolane, 2,2-dimethyl-1,3-dioxolane, 2-methoxy-1,3-dioxolane, 2-ethyl-2-methyl-1,3-dioxolane, tetrahydropyran, 1,4-dioxane, 1,2-dimethoxy benzene, 1,3-dimethoxy benzene, 1,4-dimethoxy benzene, isosorbide dimethyl ether, furan, 2-methyl furan, 3-methyl furan, 2-ethyl furan, 2-butyl furan, 2,3-dimethyl furan, 2,4-dimethyl furan, 2,5-dimethyl furan, pyran, 2-methylpyran, 3-methylpyran, 4-methylpyran, benzofuran, 2-(2-nitrovinyl) furan, thiophene, 2-methylthiophene, 2-ethylthiophene, 2-propylthiophene, 2-butylthiophene, 2,3-dimethylthiophene, 2,4-dimethylthiophene, and 2,5-dimethylthiophene.

Examples of the ester of the organic solvent may be, but is not limited to, any one selected from the group consisting of methyl acetate, ethyl acetate, propyl acetate, methyl propionate, ethyl propionate, propyl propionate, γ-butyrolactone, γ-valerolactone, γ-caprolactone, σ-valerolactone, and ε-caprolactone, and a mixture of two or more thereof.

Specific examples of the linear carbonate compound may representatively be, but is not limited to, any one selected from the group consisting of dimethyl carbonate (DMC), diethyl carbonate (DEC), dipropyl carbonate, ethylmethyl carbonate (EMC), methylpropyl carbonate, and ethylpropyl carbonate, or a mixture of two or more thereof.

In addition, specific examples of the cyclic carbonate compound may be any one selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, vinylethylene carbonate, and halides thereof, or a mixture of two or more thereof. Examples of such halides comprise, but are not limited to, fluoroethylene carbonate (FEC) and the like.

**Lithium salt**

The lithium salt is a compound that may provide lithium ions in the electrolyte. The lithium salt may include $LiPF_6$, $LiClO_4$, $LiAsF_6$, $LiBF_4$, $LiSbF_6$, $LiAlO_4$, $LiAlCl_4$, $LiCF_3CO_2$, $LiCF_3SO_3$, $LiC_4F_9SO_3$, $LiN(C_2F_5SO_3)_2$, $LiCH_3SO_3$, $LiN(C_2F_5SO_2)_2$, $LiN(CF_3SO_2)_2$, $LiC_4BO_8$, $LiCl$, $LiBr$, $LiB_{10}Cl_{10}$, $LiI$ or $LiB(C_2O_4)_2$. In the present disclosure, the lithium salt preferably includes Li-TFSI to increase the availability of sulfur and achieve high capacity and high voltage of the battery. More preferably, the lithium salt may include $LiN(CF_3SO_2)_2$ (Li-TFSI) in an amount of 80 wt% or more, 90 wt% or more or 100 wt%, based on 100 wt% of the total lithium salt.

The concentration of the lithium salt may range from 0.1 to 2.0 M, preferably 0.5 to 1 M, and more preferably 0.5 to 0.75 M. When the concentration of the lithium salt is in the above-described range, the electrolyte may have optimal conductivity and viscosity, exhibit the outstanding electrolyte performance and allow effective movement of lithium ions. When the concentration of the lithium salt is below the above-described range, it may be difficult to achieve ionic conductivity appropriate for battery operation, and when the concentration of the lithium salt is above the above-described range, the increased viscosity of the electrolyte may reduce the mobility of lithium ions or the decomposition reaction of the lithium salt may increase, resulting in battery performance degradation.

In a specific exemplary embodiment of the present disclosure, in the electrolyte comprising the first solvent, the second solvent and the lithium salt, a molar ratio of the lithium salt, the second solvent and the first solvent may be 1:0.5 to 3:4.1 to 15. In addition, in an exemplary embodiment of the present disclosure, the molar ratio of the lithium salt, the second solvent and the first solvent may be 1:2:4 to 13, 1:3:3 to 10 or 1:4:5 to 10. That is to say, in the electrolyte included in the lithium-sulfur battery of the present disclosure, the first solvent comprising the fluorinated ether compound may be included in a larger amount than the second solvent comprising the glyme-based compound.

**Other additives**

In addition to the above-described electrolyte components, the electrolyte may further comprise an additive to improve the life characteristics of the battery, suppress the decrease capacity fading of the battery, and improve the discharge capacity of the battery. For example, the additive may include at least one of a nitric acid compound, a nitrous acid-based compound, a haloalkylene carbonate-based compound such as difluoroethylene carbonate, pyridine, triethyl phosphite, triethanolamine, a cyclic ether, ethylenediamine, n-glyme, hexamethylphosphoric acid triamide, nitrobenzene derivatives, sulfur, a quinoneimine dye, N-substituted oxazolidinone, N,N-substituted imidazolidine, ethylene glycol dialkyl ether, an ammonium salt, pyrrole, 2-methoxy ethanol or aluminum trichloride. The additive may be included in an amount of 0.1 to 10 wt%, and preferably 0.1 to 5 wt%, included in an amount of 0.5 wt% to 4 wt%, 0.7 wt% to 3 wt%, 0.9 wt% to 2 wt%, specifically 0.95 wt% to 1.5 wt% based on the total weight of the electrolyte.

In a specific embodiment of the present disclosure, the electrolyte may include a nitric acid compound and/or a nitrous acid-based compound as an additive. The nitric acid compound/nitrous acid-based compound as described above has an effect of forming a stable film on the lithium metal electrode, which is a negative electrode, and improving charging and discharging efficiency. The nitric acid or nitrous acid-based compounds may include inorganic nitric acid or nitrous acid compounds such as lithium nitrate ($LiNO_3$), potassium nitrate ($KNO_3$), cesium nitrate ($CsNO_3$), barium nitrate ($Ba(NO_3)_2$), ammonium nitrate ($NH_4NO_3$), lithium nitrite ($LiNO_2$), potassium nitrite. ($KNO_3$), cesium nitrite ($CsNO_3$), and ammonium nitrite ($NH_4NO_2$); organic nitric acid or nitrous acid compounds such as methyl nitrate, dialkyl imidazolium nitrate, guanidine nitrate, imidazolium nitrate, pyridinium nitrate, ethyl nitrite, propyl nitrite, butyl nitrite, pentyl nitrite, and octyl nitrite; organic nitro compounds such as nitromethane, nitropropane, nitrobutane, nitrobenzene, dinitrobenzene, nitropyridine, dinitropyridine, nitrotoluene, and dinitrotoluene; and combinations thereof, but is not limited thereto. In a preferred embodiment of the present disclosure, the additive may include lithium nitrate.

In some embodiments, the lithium secondary battery has a retention capacity rate of more than 95%.

The retention capacity rate may be measured at 25°C. The retention capacity rate may be measured by charging and discharging for 100 to 200 cycles, for example 120 cycles at 0.3C. Prior to the measurement, the battery may be activated by charging and discharging at 0.1C for 3 cycles and subsequently charging and discharging for 2 cycles at 0.2C at 25°C. The capacity retention rate may be measured within a range of 1.8-2.7 V. In one embodiment the retention capacity rate may be measured on a lithium-sulfur battery and the skilled person may adjust the measurement method accordingly.

The retention capacity rate, often referred to as capacity retention, is a measure of how well a battery or energy storage device maintains its original capacity over time. It may be an indicator of the long-term performance and lifespan, i.e. lifetime, of the battery. The capacity retention rate is usually expressed as a percentage and is calculated by comparing the battery's current capacity to its initial (or maximum) capacity.

The capacity retention rate may be calculated at each measurement point using the following formula:

$$\text{Capacity Retention Rate (\%)} = (\text{Subsequent Capacity} / \text{Initial Capacity}) * 100,$$

wherein "Subsequent Capacity" is the capacity measured after cycling or aging, and "Initial Capacity" is the initial capacity measured before starting the test. The measured capacities per cycle may be shown in Fig. 1. The initial capacity may be the first cycle after activating the battery by charging and discharging at 0.1C for 3 cycles and subsequently charging and discharging for 2 cycles at 0.2C at 25°C. The initial capacity may be measured at 0.3C for charging and discharging. The Subsequent Capacity may be measured for 100 cycles to 200 cycles, for example 120 cycles after the Initial Cycle, preferably 120 cycles at 0.3C for charging and discharging. Preferably, the retention capacity rate may be more than 95% for each cycle within the 120 Subsequent Cycles. In a further embodiment, the retention capacity rate may be more than 95% but below 100%, like below 99%, for the average of 120 Subsequent Cycles.

In some embodiments, the average coulombic efficiency of the lithium secondary battery may be 98% or more. The coulombic efficiency of a battery can be measured with a 0.2C charge/0.3C discharge at 25°C. The average coulombic efficiency can be calculated from the average of 100 cycles to 200 cycles for example 120 or 150 cycles of the battery. Also, one cycle can be from SOC (state of charge) 100 to SOC 0. Therefore, the average coulombic efficiency can be measured with 0.2C charge/0.3C discharge for 100 cycles to 200 cycles, for example 120 cycles or 150 cycles at 25°C. In one specific embodiment of the present invention, the battery to be measured for average coulomb efficiency may be manufactured in a form in which a total of 7 positive electrodes and 8 negative electrodes are laminated with a separator interposed therebetween.

Also, the present disclosure provides a battery module comprising the lithium-sulfur battery as a unit battery. The battery module may be used as a power source for medium to large-sized devices requiring high temperature stability, long cycle characteristics, high capacity characteristics, and the like.

Examples of such medium to large-sized devices may include, but are not limited to, a power tool powered and moved by an electric motor; an electric car including an electric vehicle (EV), a hybrid electric vehicle (HEV), a plug-in hybrid electric vehicle (PHEV), and the like; an electric two-wheeled vehicle including an electric bike (E-bike) and an electric scooter (E-scooter); an electric golf cart; a power storage system, etc.

Hereinafter, preferred examples of the present disclosure will be described for better understanding, but it will be apparent to those skilled in the art that the following examples are only illustrative of the present disclosure and various changes and modifications can be made within the scope and technical idea of the present disclosure, and such variations and modifications are within the scope of the appended claims.

# [EXAMPLES]

## Preparation of a negative electrode

Li metal was put into a heating furnace and melted by applying heat at a temperature of 200°C to 500°C. Pellets of metal M were added and melted at the ratio shown in [Table 1] below. Thereafter, the heating furnace was stirred while maintaining the temperature at 200°C to 500°C. The resulting product was cooled to form a Li-M alloy ingot. The ingot was extruded and rolled to prepare a negative electrode with a thickness of 60 $\mu$m.

Table 1

|  | Example 1 | Example 2 | Comp. Example 1 | Comp. Example 2 | Comp. Example 3 | Comp. Example 4 |
|---|---|---|---|---|---|---|
| Content of metal M in alloy (mol%) | 0.415 mol% | 0.87 mol% | 0 mol% | 0.0397 mol% | 1.38 mol% | 1.336 mol% |
| Amount of lithium in alloy material (wt%) | 95 wt% | 90 wt% | 100 wt% | 99.5 wt% | 85 wt% | 95 wt% |
| Amount of metal M in alloy material (wt%) | 5 wt% | 10 wt% | 0 wt% | 0.5 wt% | 15 wt% | 5 wt% |
| Type of metal M | Sr | Sr | Sr | Sr | Sr | Al |

## Results of ICP analysis of alloy

The alloy obtained in each example and comparative example was immersed in hydrochloric acid-water solution to melt the surface to a thickness of 1 $\mu$m, and then the stock solution was analyzed using an ICP measuring device (an induced coupled plasma mass spectrometer, Perkin Elmer, OPTIMA 7300DV). Table 2 below shows the measured particle amount (wt%) of each element in each alloy. The measured amount may slightly differ from the weighted amount of Table 1 due to the sample preparation method for the ICP measuring device. According to this, each component was confirmed in an amount corresponding to the component ratio introduced during the preparation of the alloy of each comparative example and example.

Table 2

|  | Li (wt%) | Sr (wt%) | Al (wt%) |
|---|---|---|---|
| Comparative Example 1 | 100 | 0 | 0 |
| Comparative Example 2 | 99.54 | 0.46 | 0 |
| Comparative Example 3 | 84.5 | 15.5 | 0 |
| Comparative Example 4 | 95.4 | 0 | 4.6 |
| Example 1 | 94.6 | 5.4 | 0 |
| Example 2 | 90.4 | 9.6 | 0 |

## Preparation of a battery

Carbon nanotubes and sulfur were evenly mixed (sulfur: carbon nanotubes = 75 wt%: 25 wt%), and put in an oven at 155°C for 30 minutes to prepare a sulfur-carbon composite. The content of sulfur in 100 wt% of the sulfur-carbon composite was 75 wt% based on the total amount of the sulfur carbon composite. 90 wt% of the prepared sulfur-carbon composite, 5 wt% of Denka Black and 5 wt% of binder (styrene butadiene rubber/carboxymethylcellulose, 7:3 weight ratio) were mixed to prepare a slurry for manufacturing a positive electrode. The concentration of solids in the slurry was 25 wt%. The slurry was applied on both sides of an aluminum current collector having a thickness of 20 $\mu$m, dried at 50°C for 12 hours, and pressed with a roll press to prepare a positive electrode. The loading amount of the positive electrode active material was 5.4 mAh/cm$^2$, and the porosity of the positive electrode active material was 68 vol%. The porosity of the positive electrode active material was measured by the Equation 1.

[Equation 1]

$$\text{Porosity (volume \%)} = \{1\text{-(apparent density/net density)}\}\times 100$$

The apparent density in Equation 1 can be calculated from Equation 2 below.

Apparent density (g/cm$^3$) = (weight of electrode (g))/{(thickness of electrode (cm)) $\times$ (area of electrode (cm$^2$))}    [Equation 2]

As an electrolyte, a mixed solution in which 1M concentration of lithium bis(trifluoromethanesulfonyl)imide (LiTFSI) and 1 wt% of lithium nitrate (LiNO$_3$) were dissolved in an organic solvent containing 1,3-dioxolane (DOL) and dimethyl ether (DME) (DOL:DME=1:1 (volume ratio)) was used.

The prepared positive electrode and negative electrode were placed, so that the flat surfaces face to each other, and a polyethylene porous film with a thickness of 16 $\mu$m and a porosity of 68 vol% was interposed between the electrodes as a separator. The resultant product was inserted into a pouch, the manufactured electrolyte was injected therein, and the pouch was sealed to prepare a lithium-sulfur battery. In the battery, a total of 7 sheets of positive electrodes and 8 sheets of negative electrodes were stacked and folded with the separator interposed therebetween.

## Electrochemical characteristic evaluation result

The battery prepared above was activated by charging and discharging at 0.1C for up to 3 cycles and subsequently charging and discharging at 0.2C for up to 2 cycles at 25°C, and then was used for up to 120 cycles with charging and discharging at 0.3C to measure and confirm the cycle characteristics and the efficiency.

FIG. 1 shows the specific discharge capacity (mAh/g) of the batteries manufactured in the examples and the comparative examples. In addition, Table 3 below shows the capacity retention rate and discharge capacity of each example and comparative example. The capacity retention rate and the discharge capacity show values after 120 cycles and 6 cycles, respectively, including 5 drive cycles for activation. Furthermore, if the capacity retention rate after 120 cycles at 0.3C is above 1,000 mAh/g, the example has been indicated with "+", if the capacity retention rate after 120 cycles at 0.3C is below 1,000 mAh/g, the example has been indicated with "-",

According to FIG. 1 and Table 3, it was confirmed that the batteries of Examples 1 and 2 had excellent specific capacity characteristics compared to the batteries of the comparative examples. Meanwhile, Comparative Example 2 was confirmed to be similar to Comparative Example 1 in discharge capacity and life characteristics. It is considered that the effect of the alloy was not exerted due to the low content of metal M. Meanwhile, Comparative Example 3 was confirmed to have low life characteristics while showing a lower discharge capacity than Comparative Example 1 since an excessive amount of Sr is included. Meanwhile, Comparative Example 4 showed a higher discharge capacity than Comparative Example 1, but it was confirmed that the life characteristics were deteriorated compared to the alloy containing Sr. Additionally, it has been shown that the discharge capacity for Example 1 and Example 2 remains high above 1,000 mAh/g even after 120 cycles, whereas the discharge capacity for Comparative Example 1, Comparative Example 2, Comparative Example 3 and Comparative Example 4, decrease after 120 cycles to below 1,000 mAh/g. Thus, Example 1 and Example 2 demonstrate lithium sulfur batteries with enhanced capacity retention at a high discharge capacity which remains high, even after several uses, like 120 cycles.

Table 3

| Example | Capacity retention rate (after 120 cycles) | Discharge capacity after 6 cycles (charging and discharging at 0.3C) | Discharge capacity after 120 cycles (charging and discharging at 0.3C) |
|---|---|---|---|
| Example 1 | 97 % | 1,070 mAh/g | + |
| Example 2 | 95 % | 1.060 mAh/g | + |
| Comparative Example 1 | 94 % | 994 mAh/g | - |
| Comparative Example 2 | 93 % | 1,020 mAh/g | - |
| Comparative Example 3 | 87 % | 1,040 mAh/g | - |
| Comparative Example 4 | 74 % | 1,020 mAh/g | - |

**Claims**

1. A lithium secondary battery, comprising a positive electrode, a negative electrode, a separator interposed between the positive electrode and the negative electrode, and an electrolyte, wherein

   the negative electrode is a negative electrode for a lithium secondary battery, comprising a Li-M alloy containing lithium (Li) and at least one metal (M) selected from alkaline earth metals; and
   the lithium secondary battery is a lithium-sulfur battery, comprising a positive electrode active material containing sulfur ($S_8$) or a sulfur (S) compound.

2. The lithium secondary battery according to claim 1,
   wherein metal M is at least one or more selected from the group consisting of beryllium (Be), magnesium (Mg), calcium (Ca), strontium (Sr), barium (Ba), and radium (Ra).

3. The lithium secondary battery according to any one of the preceding claims, wherein the metal M is strontium (Sr).

4. The lithium secondary battery according to any one of the preceding claims, wherein the weight ratio of the weight% of Li and of the weight% of M based on the total weight% of the Li-M alloy is in the range between 99:1 to 90:10.

5. The lithium secondary battery according to any one of the preceding claims, wherein an amount of metal M is 0.10 mol% to 1.30 mol% of the Li-M alloy.

6. The lithium secondary battery according to any one of the preceding claims, wherein an amount of metal M is 1 wt% to 10 wt% of the Li-M alloy.

7. The lithium secondary battery according to any one of the preceding claims, wherein the Li-M alloy consists of lithium (Li) and at least one metal (M) selected from alkaline earth metals.

8. The lithium secondary battery according to any one of the preceding claims, wherein the Li-M alloy consists of lithium (Li) and metal (M) selected from alkaline earth metals.

9. The lithium secondary battery according to any one of the preceding claims, wherein the Li-M alloy is 95 wt% or more with respect to 100 wt% of a negative electrode active material.

10. The lithium secondary battery according to any one of the preceding claims, wherein the Li-M alloy is a negative electrode active material layer in the form of a metal foil.

11. The lithium secondary battery according to any one of the preceding claims, further comprising a current collector.

12. The lithium secondary battery according to any one of the preceding claims, wherein the electrolyte is an electrolyte solution comprising a mixture of acyclic ether and cyclic ether; and
wherein a volume ratio of the acyclic ether and the cyclic ether is 5:95 to 95:5 (v/v).

13. The lithium secondary battery according to one of the preceding claims, wherein the lithium secondary battery has a retention capacity rate of more than 95%.

14. A method for the lithium secondary battery according to any one of the preceding claims, comprising as step of preparing the negative electrode comprising:

   melting metallic lithium to obtain a first melt;
   adding an alkaline earth metal to the first melt obtained in the melting step to obtain a second melt;
   alloying the second melt by maintaining the second melt at a temperature of at least 200°C; and
   cooling the second melt obtained in the alloying step to obtain a Li-M alloy.

15. The method for preparing a negative electrode for a lithium secondary battery according to claim 14, wherein the alloy is obtained in the form of an ingot, and the method further comprises thinning the ingot into a plate structure with a predetermined thickness.


**Patentansprüche**

1. Lithium-Sekundärbatterie, umfassend eine positive Elektrode, eine negative Elektrode, einen Separator, der zwischen der positiven Elektrode und der negativen Elektrode angeordnet ist, und einen Elektrolyten, wobei

   die negative Elektrode eine negative Elektrode für eine Lithium-Sekundärbatterie ist, umfassend eine Li-M-Legierung, die Lithium (Li) und mindestens ein Metall (M) enthält, das aus Erdalkalimetallen ausgewählt ist; und
   die Lithium-Sekundärbatterie eine Lithium-Schwefel-Batterie ist, umfassend ein aktives Material der positiven Elektrode, das Schwefel ($S_8$) oder eine Schwefel (S)-Verbindung enthält.

2. Lithium-Sekundärbatterie nach Anspruch 1,
wobei das Metall M mindestens eines oder mehrere ist, ausgewählt aus der Gruppe bestehend aus Beryllium (Be), Magnesium (Mg), Calcium (Ca), Strontium (Sr), Barium (Ba) und Radium (Ra).

3. Lithium-Sekundärbatterie nach einem der vorhergehenden Ansprüche, wobei das Metall M Strontium (Sr) ist.

4. Lithium-Sekundärbatterie nach einem der vorhergehenden Ansprüche, wobei das Gewichtsverhältnis der Gewichts-% von Li und der Gewichts-% von M, bezogen auf die Gesamt-Gewichts-% der Li-M-Legierung, im Bereich zwischen 99:1 bis 90:10 liegt.

5. Lithium-Sekundärbatterie nach einem der vorhergehenden Ansprüche, wobei eine Menge an Metall M 0,10 Mol-% bis 1,30 Mol-% der Li-M-Legierung beträgt.

**6.** Lithium-Sekundärbatterie nach einem der vorhergehenden Ansprüche, wobei eine Menge an Metall M 1 Gew.-% bis 10 Gew.-% der Li-M-Legierung beträgt.

**7.** Lithium-Sekundärbatterie nach einem der vorhergehenden Ansprüche, wobei die Li-M-Legierung aus Lithium (Li) und mindestens einem Metall (M) besteht, das aus Erdalkalimetallen ausgewählt ist.

**8.** Lithium-Sekundärbatterie nach einem der vorhergehenden Ansprüche, wobei die Li-M-Legierung aus Lithium (Li) und Metall (M) besteht, das aus Erdalkalimetallen ausgewählt ist.

**9.** Lithium-Sekundärbatterie nach einem der vorhergehenden Ansprüche, wobei die Li-M-Legierung 95 Gew.-% oder mehr, bezogen auf 100 Gew.-% eines aktiven Materials der negativen Elektrode, beträgt.

**10.** Lithium-Sekundärbatterie nach einem der vorhergehenden Ansprüche, wobei die Li-M-Legierung eine aktive Materialschicht der negativen Elektrode in Form einer Metallfolie ist.

**11.** Lithium-Sekundärbatterie nach einem der vorhergehenden Ansprüche, ferner umfassend einen Stromabnehmer.

**12.** Lithium-Sekundärbatterie nach einem der vorhergehenden Ansprüche, wobei der Elektrolyt eine Elektrolytlösung ist, die eine Mischung aus acyclischem Ether und cyclischem Ether umfasst; und
wobei ein Volumenverhältnis des acyclischen Ethers und des cyclischen Ethers 5:95 bis 95:5 (v/v) beträgt.

**13.** Lithium-Sekundärbatterie nach einem der vorhergehenden Ansprüche, wobei die Lithium-Sekundärbatterie eine Retentionskapazitätsrate von mehr als 95 % aufweist.

**14.** Verfahren für die Lithium-Sekundärbatterie nach einem der vorhergehenden Ansprüche, umfassend als Schritt des Herstellens der negativen Elektrode:

Schmelzen von metallischem Lithium, um eine erste Schmelze zu erhalten;
Zugeben eines Erdalkalimetalls zu der ersten Schmelze, die in dem Schmelzschritt erhalten wurde, um eine zweite Schmelze zu erhalten;
Legieren der zweiten Schmelze durch Halten der zweiten Schmelze bei einer Temperatur von mindestens 200 °C; und
Kühlen der zweiten Schmelze, die in dem Legierungsschritt erhalten wurde, um eine Li-M-Legierung zu erhalten.

**15.** Verfahren zum Herstellen einer negativen Elektrode für eine Lithium-Sekundärbatterie nach Anspruch 14, wobei die Legierung in Form eines Ingots erhalten wird und das Verfahren ferner das Verdünnen des Ingots zu einer Plattenstruktur mit einer vorbestimmten Dicke umfasst.

**Revendications**

**1.** Batterie rechargeable au lithium, comprenant une électrode positive, une électrode négative, un séparateur interposé entre l'électrode positive et l'électrode négative, et un électrolyte, dans laquelle

l'électrode négative est une électrode négative pour une batterie rechargeable au lithium, comprenant un alliage Li-M contenant du lithium (Li) et un ou plusieurs métaux (M) sélectionnés parmi des métaux alcalino-terreux ; et
la batterie rechargeable au lithium est une batterie au lithium-soufre, comprenant un matériau actif d'électrode positive contenant du soufre ($S_8$) ou un composé de soufre (S).

**2.** Batterie rechargeable au lithium selon la revendication 1,
dans laquelle le métal M est un ou plusieurs éléments sélectionnés dans le groupe constitué de béryllium (Be), magnésium (Mg), calcium (Ca), strontium (Sr), baryum (Ba) et radium (Ra).

**3.** Batterie rechargeable au lithium selon l'une quelconque des revendications précédentes, dans laquelle le métal M est le strontium (Sr).

4. Batterie rechargeable au lithium selon l'une quelconque des revendications précédentes, dans laquelle le rapport en poids du % en poids de Li et du % en poids de M sur la base du % total en poids de l'alliage Li-M est dans la plage de 99: 1 à 90: 10.

5. Batterie rechargeable au lithium selon l'une quelconque des revendications précédentes, dans laquelle une quantité de métal M est 0,10 % en moles à 1,30 % en moles de l'alliage Li-M.

6. Batterie rechargeable au lithium selon l'une quelconque des revendications précédentes, dans laquelle une quantité de métal M est 1 % en poids à 10 % en poids de l'alliage Li-M.

7. Batterie rechargeable au lithium selon l'une quelconque des revendications précédentes, dans laquelle l'alliage Li-M est constitué de lithium (Li) et d'un ou plusieurs métaux (M) sélectionnés parmi des métaux alcalino-terreux.

8. Batterie rechargeable au lithium selon l'une quelconque des revendications précédentes, dans laquelle l'alliage Li-M est constitué de lithium (Li) et d'un métal (M) sélectionnés parmi des métaux alcalino-terreux.

9. Batterie rechargeable au lithium selon l'une quelconque des revendications précédentes, dans laquelle l'alliage Li-M est égal ou supérieur à 95 % en poids pour 100 % en poids d'un matériau actif d'électrode négative.

10. Batterie rechargeable au lithium selon l'une quelconque des revendications précédentes, dans laquelle l'alliage Li-M est une couche de matériau actif d'électrode négative sous la forme d'une feuille métallique.

11. Batterie rechargeable au lithium selon l'une quelconque des revendications précédentes, comprenant en outre un collecteur de courant.

12. Batterie rechargeable au lithium selon l'une quelconque des revendications précédentes, dans laquelle l'électrolyte est une solution d'électrolyte comprenant un mélange d'éther acyclique et d'éther cyclique ; et
dans laquelle un rapport en volume de l'éther acyclique et de l'éther cyclique est 5:95 à 95:5 (v/v).

13. Batterie rechargeable au lithium selon l'une quelconque des revendications précédentes, dans laquelle la batterie rechargeable au lithium a un taux de rétention de capacité supérieur à 95 %.

14. Procédé pour une batterie rechargeable au lithium selon l'une quelconque des revendications précédentes, comprenant une étape de préparation de l'électrode négative consistant à :

faire fondre du lithium métallique pour obtenir une première matière fondue ;
ajouter un métal alcalino-terreux à la première matière fondue obtenue à l'étape de fusion pour obtenir une deuxième matière fondue ;
mettre en alliage la deuxième matière fondue en maintenant la deuxième matière fondue à une température d'au moins 200°C ; et
refroidir la deuxième matière fondue obtenue à l'étape de mise en alliage pour obtenir un alliage Li-M.

15. Procédé de préparation d'une électrode négative pour une batterie rechargeable au lithium selon la revendication 14, dans lequel l'alliage est obtenu sous la forme d'un lingot, et le procédé consiste en outre à amincir le lingot en une structure de plaque ayant une épaisseur prédéterminée.

FIG. 1

**EP 4 343 878 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230114850
- KR 1020230100676
- KR 1020220110406

**Non-patent literature cited in the description**

- **LIU et al.** *J. Am. Chem. Soc.*, 2020, vol. 142, 2438